# EUROPÄISCHE PATENTSCHRIFT

(11) **EP 2 451 001 B1**
(45) Veröffentlichungstag und Bekanntmachung des Hinweises auf die Patenterteilung: **18.04.2018**
(21) Anmeldenummer: 11184642.4
(22) Anmeldetag: 11.10.2011
(51) Int. Cl.: H01M 10/44, H01M 10/46, H01M 10/48, H02J 7/00

(54) **MOBILES ELEKTROGERÄT MIT LADEZUSTANDSANZEIGE UND AKKUMULATOR HIERFÜR**
MOBILE ELECTRIC DEVICE WITH CHARGE DISPLAY AND BATTERY FOR SAME
APPAREIL ÉLECTRIQUE MOBILE DOTÉ D'UN AFFICHAGE D'ÉTAT DE CHARGEMENT ET ACCUMULATEUR ASSOCIÉ

(30) Priorität: 08.11.2010 DE 102010043582
(43) Veröffentlichungstag der Anmeldung: 09.05.2012
(73) Patentinhaber: HILTI Aktiengesellschaft, 9494 Schaan (LI)
(72) Erfinder: Sever, Eduard, 6713 Ludesch (AT); Ljubojevic, Dragomir, 9000 St. Gallen (CH); Vedder, Joachim, 88138 Hergensweiler (DE); Huber, Franz, 86865 Markt Wald (DE); Ziegler, Bernd, 86856 Hiltenfingen (DE)
(74) Vertreter: Hilti Aktiengesellschaft Corporate Intellectual Property

(56) Entgegenhaltungen:
- EP-A1- 2 157 637
- EP-A2- 0 750 215
- WO-A2-98/01917

## Beschreibung

Die Erfindung betrifft ein mobiles Elektrogerät, umfassend ein Gerätegehäuse mit wenigstens einem Akkuschacht zur Aufnahme eines Akkumulators mit zumindest einer spannungserzeugenden Zelle und einer akkuseitigen Ladezustandsanzeige, einen elektrischen Verbraucher einen Netzanschluss, sowie ein Ladegerät zum Laden des zumindest einen Akkumulators. Weiterhin betrifft die Erfindung einen Akkumulator, umfassend ein Akkugehäuse, wenigstens eine in dem Akkugehäuse angeordnete spannungserzeugende Zelle, eine im Akkugehäuse angeordnete akkuseitige elektronische Schaltung zur Ermittlung des Ladezustands der zumindest einen Zelle, eine am Akkugehäuse angeordnete akkuseitige Ladezustandsanzeige und einen am Akkugehäuse angeordneten Schalter zur Aktivierung der akkuseitigen elektronischen Schaltung und/oder der akkuseitigen Ladezustandsanzeige. Schliesslich betrifft die Erfindung ein Set, umfassend wenigstens ein mobiles Elektrogerät und einen dafür passenden Akkumulator.

Ein Wunsch der Nutzer mobiler, akkumulatorbetriebener Geräte ist eine möglichst komfortable Anzeige des Ladezustands eines zum Betrieb des genannten Gerätes vorgesehenen Akkumulators (umgangssprachlich auch als "Batterie" bezeichnet). Zumeist wird der Ladezustand von dem Gerät selbst ermittelt und angezeigt. Abweichend davon sind aber auch Akkumulatoren bekannt, die den Ladezustand autark anzeigen können.

Aus der DE 10 2005 000 135 A1 ist dazu ein Akkumulator für ein Handwerkzeuggerät offenbart. Dieser Akkumulator weist ein Gehäuse auf, in dem mehrere Akkuzellen untergebracht sind und an dem von aussen zugängliche und mit den Akkuzellen elektrisch verbundene Kupplungsmittel vorgesehen sind. Desweiteren umfasst der Akkumulator eine Ladezustandsanzeige, die über einen von aussen zugänglichen Schalter aktivierbar ist und den Ladezustand der Akkuzellen anzeigt. Der Schalter ist dabei durch Betätigungsmittel einer Verriegelungsmechanik des Akkumulators gebildet.

Des Weiteren zeigt die WO 98/01917 A2 einen Akkumulator mit einer Anzahl an ladbaren elektrischen Zellen. Die elektrischen Zellen sind in einem Gehäuse positioniert. An dem Gehäuse des Akkumulators ist eine Anzeigevorrichtung angebracht. Durch die Anzeigevorrichtung kann der Ladezustand und/oder der Funktionszustand des Akkumulators angezeigt werden.

Weiterhin ist aus der US 6,078,164 A ein tragbarer Computer bekannt, umfassend einen Akkuschacht und einen darin befindlichen Akkumulator. Der Akkumulator weist eine Ladezustandsanzeige auf, welche auch bei eingesetztem Akkumulator durch ein Sichtfenster im Gehäuse des Computers sichtbar ist. Zur Aktivierung der Ladezustandsanzeige weist der Akkumulator einen Schalter auf, welcher mit Hilfe eines am Computer angeordneten Knopfes von aussen betätigt werden kann. Somit kann der Ladezustand eines in dem Schacht befindlichen Akkumulators ermittelt werden, ohne dass dieser dazu aus dem Schacht entnommen werden müsste.

Schliesslich ist aus der EP 1 419 723 B1 ein Set, bestehend aus einem Staubsauger, welcher sowohl am Netz als auch mit Akkumulatoren betrieben werden kann, bekannt. Die Akkumulatoren können darüber hinaus in verschiedenen Elektrohandgeräten genutzt werden.

Nachteilig an den bekannten Lösungen, beispielsweise an der Lösung gemäss der US 6,078,164 A ist, dass das dort vorgesehene Sichtfenster sowie der Knopf exakt mit der Ladezustandsanzeige und dem Schalter auf dem Akkumulator ausgerichtet sein müssen. Einerseits kann eine fehlerhafte Bedienung leicht dazu führen, dass der Ladezustand nicht abgefragt werden kann, beispielsweise wenn der betreffende Knopf nicht exakt mit dem Schalter ausgerichtet ist. Andererseits muss die Bauart des Akkumulators exakt auf die Bauart des betriebenen Geräts abgestimmt werden. Solche Akkumulatoren sind somit nicht universell einsetzbar.

Die Aufgabe der Erfindung ist es daher, ein verbessertes mobiles Elektrogerät-und ein verbessertes Set umfassend wenigstens ein mobiles Elektrogerät und zumindest einen austauschbaren Akkumulator-zu schaffen. Insbesondere soll die Austauschbarkeit von Akkumulatoren verbessert und die Abfrage des Ladezustands derselben erleichtert werden.

Erfindungsgemäss wird diese Aufgabe mit einem mobilen Elektrogerät der eingangs genannten Art gelöst, umfassend ein Gerätegehäuse mit wenigstens einem Akkuschacht zur Aufnahme eines Akkumulators mit zumindest einer spannungserzeugenden Zelle und einer akkuseitigen Ladezustandsanzeige, einen elektrischen Verbraucher, einen Netzanschluss sowie ein Ladegerät zum Laden des zumindest einen Akkumulators und Mittel zum Erfassen des Ladezustands des zumindest einen Akkumulators und eine am mobilen Elektrogerät angeordnete geräteseitige Ladezustandsanzeige sowie eine Steuerung, welche dazu vorbereitet ist, die geräteseitige Ladezustandsanzeige im Netzbetrieb des Elektrogeräts zu deaktivieren. Unter dem Begriff eines "mobilen Elektrogerätes" wird ein Elektrogerät verstanden, welches auch im Betrieb von einer Arbeitsstelle zu einer anderen Arbeitsstelle versetzbar bzw. verschiebbar ist.

Schliesslich wird die Aufgabe der Erfindung durch ein Set, umfassend wenigstens ein erfindungsgemässes mobiles Elektrogerät und einen austauschbaren, vorteilhaft Akkumulator, gelöst.

Erfindungsgemäss wird damit erreicht, dass der Ladezustand sowohl autark am Akkumulator selbst angezeigt werden kann, als auch von dem betriebenen Gerät. Des Weiteren kann auf diese Weise elektrische Energie eingespart werden, da der Ladezustand im Netzbetrieb weniger relevant ist. Optional kann eine Taste vorgesehen sein, mit welcher der Ladezustand bedarfsweise auch manuell abgefragt werden kann. Dabei werden die erwähnten Nachteile, wie zum Beispiel Fehlfunktion bei fehlerhafter Ausrichtung des Akkumulators im betriebenen Gerät und schlechte Austauschbarkeit von Akkumulatoren überwunden. Im Gegensatz dazu ist die Anordnung von akkuseitigen Schaltern und akkuseitigen Ladezustandsanzeigen bei der Erfindung unabhängig von dem betriebenen Gerät, da letzteres über eine zusätzliche eigene Ladezustandsanzeige verfügt. Der Nutzer des mobilen Geräts kann auch sofort erkennen, ob ein Akkumulator in den Akkuschacht eingeschoben ist, ohne eine Abdeckung desselben öffnen zu müssen.

Die Darstellung des Ladezustands kann mittels Leuchtmittel oder auch mechanisch als Balkendarstellung erfolgen. Die Leuchtmittel können sowohl rund als auch quadratisch, rechteckig und dreieckig ausgeführt sein.

Unter einem "Akkuschacht" ist im Rahmen der Erfindung jede Art von Vorrichtung zu verstehen, in die ein Akkumulator zum Zwecke des Energietransfers eingelegt bzw. eingesteckt werden kann.

Vorteilhafte Ausgestaltungen und Weiterbildungen der Erfindung ergeben sich aus den Unteransprüchen sowie aus der Beschreibung in Zusammenschau mit den Figuren.

Besonders vorteilhaft ist es, wenn die Mittel zum Erfassen des Ladezustands durch eine im mobilen Elektrogerät angeordnete geräteseitige elektronische Schaltung gebildet sind, welche elektrisch mit der zumindest einen spannungserzeugenden Zelle verbunden ist. Bei dieser Variante der Erfindung sind also keine weiteren Anschlüsse, als die zur Versorgung des betreffenden Geräts ohnehin vorhanden sind, vonnöten. Die Erfindung kann somit besonders einfach in die Realität umgesetzt werden, insbesondere weil bestehende Akkumulatoren unverändert weiterverwendet werden können.

Besonders vorteilhaft ist es auch, wenn die Mittel zum Erfassen des Ladezustands durch eine Schnittstelle zu einem in dem Akkuschacht befindlichen Akkumulator gebildet sind, wobei der Akkumulator eine akkuseitige elektronische Schaltung zur Ermittlung des Ladezustands der zumindest einen Zelle umfasst und wobei die Schnittstelle dazu vorbereitet ist, den von der genannten ersten elektronischen Schaltung ermittelten Ladezustand zu empfangen. Bei dieser Variante der Erfindung kann die geräteseitige elektronische Schaltung relativ einfach gehalten werden, da der Ladezustand des Akkumulators ja an sich von der akkuseitigen elektronischen Schaltung ermittelt wird. Beispielsweise können elektrische Schnittstellen, optische Schnittstellen beziehungsweise Funkschnittstellen zur Datenübertragung (d.h. zur Übertragung des ermittelten Ladezustands) zwischen der geräteseitigen elektronischen Schaltung und der akkuseitigen elektronischen Schaltung verwendet werden.

Günstig ist es, wenn das mobile Elektrogerät eine Steuerung umfasst, welche dazu vorbereitet ist, die geräteseitige Ladezustandsanzeige im Akkubetrieb des Elektrogeräts zu aktivieren. Auf diese Weise kann ein Nutzer stets den Ladezustand, bzw. die Restlaufzeit des betriebenen Geräts ablesen. Beispielsweise kann die genannte Steuerung in einer zentralen Gerätesteuerung oder in dem Ladegerät integriert sein.

Günstig ist es weiterhin, wenn das mobile Elektrogerät eine Steuerung umfasst, welche dazu vorbereitet ist, die geräteseitige Ladezustandsanzeige beim Ausschalten des Elektrogeräts zu deaktivieren. Auch in diesem Zustand ist der Ladezustand der Akkumulatoren in der Regel von geringerem Interesse, weswegen die Ladezustandsanzeige zwecks Einsparung von Energie deaktiviert wird. Auch hier kann eine optionale Taste vorgesehen sein, mit welcher der Ladezustand bedarfsweise auch manuell abgefragt werden kann.

Vorteilhaft ist es zudem, wenn das mobile Elektrogerät als Staubsauger ausgebildet ist. Insbesondere ist dies von Vorteil, wenn der Staubsauger Teil eines Sets ist, welches zusätzlich wenigstens ein Elektrohandgerät sowie mehrere zwischen dem zumindest einen Elektrohandgerät und dem zumindest einen mobilen Elelctrogerät austauschbaren Akkumulatoren umfasst. Zumeist besteht ein Staubsauger aus einem fahrbaren Grundteil und einer über einen Saugschlauch mit diesem verbundenen Saugdüse. Da der Grundteil in der Regel nicht angehoben werden muss, sondern beim Staubsaugen bloss hinterher gezogen wird, eignet sich ein Staubsauger sehr gut als zentrale Ladestation der relativ schweren Akkumulatoren. Auf diese Weise können Akkumulatoren auf der Baustelle oder im Haushalt komfortabel geladen werden. Einerseits kann ein leerer Akkumulator eines Elektrohandgeräts (z.B. Akkuschrauber, Akkubohrmaschine, Akkusäge, Akkuschleifmaschine, Akkuhobelmaschine, Akku-Tischsauger, Akkuscheinwerfer, Akkuradio, usw.) gegen einen vollen aus dem Staubsauger getauscht werden. Andererseits kann der Staubsauger aber auch autark, d.h. abseits des Stromnetzes betrieben werden. Durch die erfindungsgemässen Massnahmen ist der Ladezustand eines Akkumulators stets sichtbar, sowohl wenn dieser im mobilen Elektrogerät eingelegt ist, also bei entnommenem Akkumulator. Der Vorteil der Erfindung tritt hier somit besonders hervor. Diese Vorteile sind aber nicht auf Staubsauger beschränkt, sondern gelten auch für weitere verschiebbare bzw. fahrbare Geräte bzw. Geräte, deren Grundteil nur vergleichsweise selten bewegt wird. Ein weiteres Beispiel für ein solches Gerät ist ein Hochdruckreiniger.

An dieser Stelle wird angemerkt, dass die für das erfindungsgemässe mobile Elektrogerät angeführten Varianten und daraus resultierenden Vorteile sinngemäss auch für den erfindungsgemässen Akkumulator sowie für das erfindungsgemässe Set gelten und umgekehrt.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert. Es zeigen dabei:

Ist der Netzanschluss 5 mit einem Stromnetz verbunden, so wird der Verbraucher 4 über das Netz mit Strom versorgt. Desgleichen wird ein im Akkuschacht 3 befindlicher Akkumulator 7 über das Netz geladen. Wird das Gerät 1a vom Netz getrennt, so wird der Verbraucher 4 über den Akkumulator 7 mit elektrischer Energie versorgt. Das Ladegerät 6 sorgt in den verschiedenen Betriebszuständen für die gewünschte Verteilung der Energie. Denkbar ist aber auch, dass diese Aufgabe von einer anderen elektronischen Baueinheit übernommen wird.

Wird der Akkumulator 7 in den Akkuschacht 3 gesteckt, so sind weder der Schalter 12 zugänglich, noch ist die akkuseitige Ladezustandsanzeige 11, welche von der akkuseitigen elektronischen Schaltung 10 zur Ermittlung des Ladezustands der spannungserzeugenden Zellen 9 angesteuert wird, sichtbar. Zudem kann der Akkuschacht 3 auch mit einem Deckel (nicht dargestellt) verschlossen sein. Aus diesem Grund wird der Ladezustand der Zellen 9 über die geräteseitige elektronische Schaltung 13a, welche elektrisch mit den spannungserzeugenden Zellen 9 verbunden ist, ermittelt und an der geräteseitigen Ladezustandsanzeige 14 angezeigt.

Vorteilhaft wird die geräteseitige Ladezustandsanzeige 14 im Akkubetrieb des Elektrogeräts 1a aktiviert. Das Elektrogerät 1a umfasst dazu eine Steuerung, welche beispielsweise im Ladegerät 6 oder einer zentralen Gerätesteuerung (nicht dargestellt) integriert ist. Vorteilhaft wird die geräteseitige Ladezustandsanzeige 14 im Netzbetrieb des Elektrogeräts 1a und/oder beim Ausschalten des Elektrogeräts 1a deaktiviert.

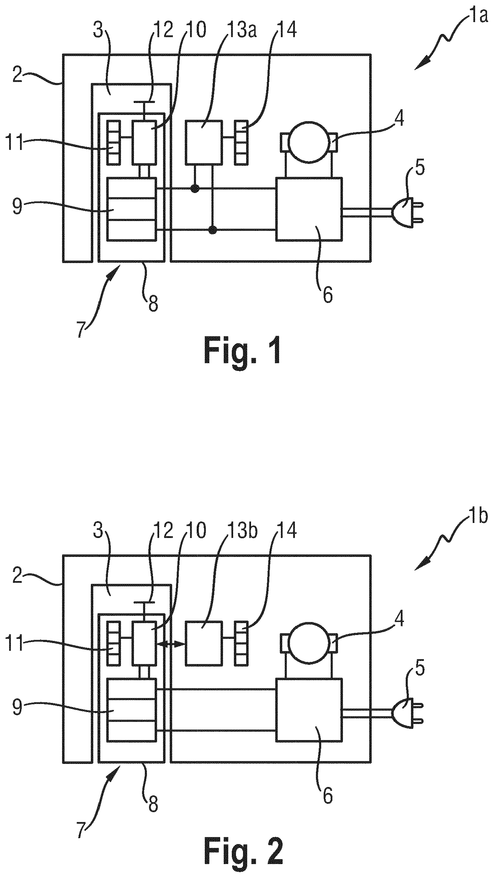

Fig. 2 zeigt ein mobiles Elektrogerät 1b, welches dem in Fig. 1 dargestellten Elektrogerät 1a sehr ähnlich ist. Im Unterschied dazu sind die Mittel zum Erfassen des Ladezustands durch eine Schnittstelle 13b zu einem im Akkuschacht 3 befindlichen Akkumulator 7 gebildet, welche dazu vorbereitet ist, den von der akkuseitigen elektronischen Schaltung 10 ermittelten Ladezustand zu empfangen. Bei dieser Variante ist also keine elektrische Verbindung zwischen der geräteseitigen elektronischen Schaltung 13a und den spannungserzeugenden Zellen 9 nötig. Stattdessen wird die geräteseitige elektronische Schaltung 13b mit der akkuseitigen elektronischen Schaltung 10 über eine (Daten)Schnittstelle verbunden. Diese kann beispielsweise als elektrische Schnittstelle, optische Schnittstelle oder Funkschnittstelle ausgebildet sein.

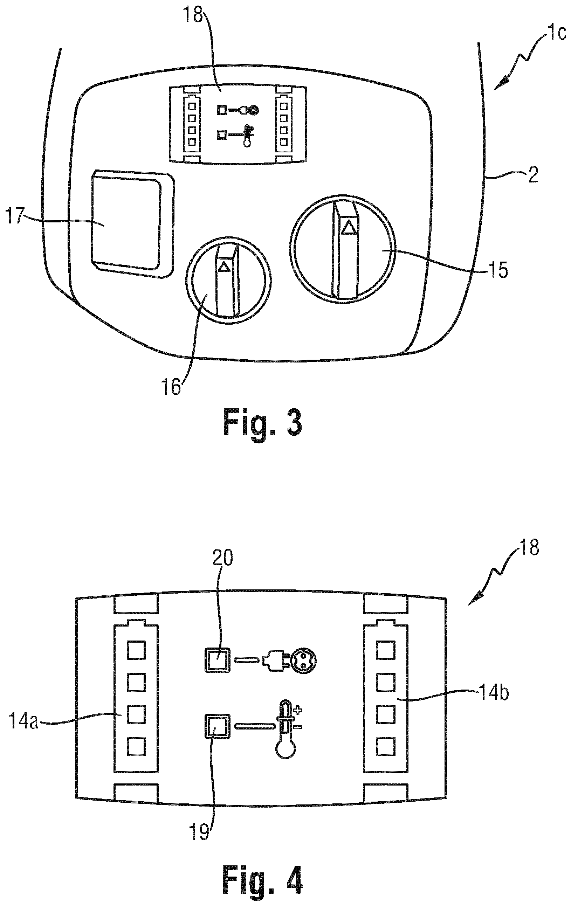

Fig. 3 zeigt nun ein mobiles Elektrogerät, welches als Staubsauger 1c ausgebildet ist. Dieser umfasst ein Gehäuse 2, einen ersten Drehregler/-schalter 15, einen zweiten Drehregler/-schalter 16, eine Abdeckung 17 für einen Akkuschacht (nicht dargestellt), sowie ein Anzeigefeld 18.

Fig. 4 zeigt das Anzeigefeld 18 nun im Detail. Dieses umfasst eine erste geräteseitige Ladezustandsanzeige 14a für einen ersten Akkumulator 7 und eine zweite geräteseitige Ladezustandsanzeige 14b für einen zweiten Akkumulator 7. Weiterhin umfasst das Anzeigefeld 18 eine Temperaturanzeige 19 und eine Neztanschlussanzeige 20.

Die Funktion des in der Fig. 3 dargestellten Staubsaugers 1c bzw. des in der Fig. 4 dargestellten Anzeigefelds 18 ist nun wie folgt:

Mit den Drehreglern/-schaltern 15 und 16 kann in an sich bekannter Weise der Staubsauger 1c ein- und ausgeschaltet werden, bzw. die Saugkraft eingestellt werden. In den Akkuschacht 3 hinter der Abdeckung 17 können Akkumulatoren 7 eingeschoben werden, sodass der Staubsauger 1c nicht nur am Netz, sondern auch autark betrieben werden kann. Wenn der Staubsauger 1c mit dem Stromnetz verbunden ist, dann leuchtet die Netzanschlussanzeige 20. An den Ladezustandsanzeigen 14a und 14b wird der Ladezustand der im Akkuschacht 3 befindlichen Akkumulatoren 7 angezeigt, hier mit vier Leuchtdioden, die einen Ladezustand von 25%, 50%, 75% und 100% signalisieren. Wird ein Akkumulator 7 im Betrieb oder beim Laden unzulässig erwärmt, so wird dies an der Temperaturanzeige 19 angezeigt.

Obiges Beispiel ist rein illustrativ zu sehen. Selbstverständlich ist jede andere Anordnung der Anzeigen 14a, 14b, 19 und 20, eine abweichende Anzahl von Akkumulatoren 7, sowie eine abweichende Anzahl von Leuchtdioden für die Ladezustandsanzeigen 14a und 14b beziehungsweise eine andere Zuordnung des Ladezustands denkbar.

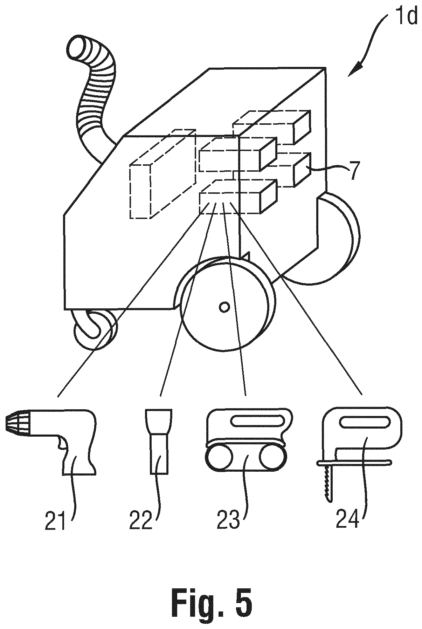

Fig. 5 zeigt nun ein Beispiel für ein erfindungsgemässes Set, umfassend wenigstens ein mobiles Elektrogerät, hier gebildet durch einen Staubsauger 1d, und wenigstens einen Akkumulator 7. Vorteilhaft umfasst das Set wenigstens ein Elektrohandgerät mit einem Akkuschacht zur Aufnahme eines Akkumulators 7. Rein beispielhaft sind ein Akkuschrauber 21, eine Taschenlampe 22, ein Bandschleifer 23 sowie eine Stichsäge 24 als Elektrohandgeräte des Sets vorgesehen. Das Set besteht aus somit aus mehreren Modulen, welche bedarfsweise miteinander kombinierbar sind. Im Staubsauger 1d können bis zu vier Akkumulatoren 7 eingeschoben werden, die dort geladen bzw. zum Betrieb des Staubsaugers 1d verwendet werden können. Im vorderen Teil des Staubsaugers 1d befindet sich darüber hinaus eine nicht näher bezeichnete Steuerung, welche auch ein Ladegerät für die Akkumulatoren 7 umfassen kann.

Abschliessend wird darauf hingewiesen, dass die Figuren teilweise unmasstäblich und auch stark vereinfacht gezeichnet sind. Eine real ausgeführtes mobiles Elektrogerät 1a..1d kann daher mehr Bestandteile als dargestellt enthalten und somit deutlich komplexer aufgebaut sein, als dies in den Figuren dargestellt ist. Teile der in den Figuren dargestellten Anordnungen können darüber hinaus auch die Basis für unabhängige Erfindungen bilden.

Die folgende Bezugszeichenliste und die technischen Lehren der Patentansprüche gelten als im Rahmen der Offenbarung liegend und offenbaren für den Fachmann alleine oder in Zusammenschau mit den Figuren weitere Details der Erfindung und ihrer Ausführungsbeispiele.

### Bezugszeichenliste

- 1a..1d: Mobiles Elektrogerät
- 2: Gerätegehäuse
- 3: Akkuschacht
- 4: elektrischer Verbraucher (Motor)
- 5: Netzanschluss
- 6: Ladegerät
- 7: Akkumulator
- 8: Akkugehäuse
- 9: spannungserzeugende/galvanische Zelle
- 10: akkuseitige elektronische Schaltung
- 11: akkuseitige Ladezustandsanzeige
- 12: Schalter
- 13a, 13b: geräteseitige elektronische Schaltung
- 14, 14a, 14b: geräteseitige Ladezustandsanzeige
- 15: erster Drehregler/-schalter
- 16: zweiter Drehregler/-schalter
- 17: Abdeckung für Akkuschacht
- 18: Anzeigefeld
- 19: Temperaturanzeige
- 20: Netzanschlussanzeige
- 21: Akkuschrauber
- 22: Taschenlampe
- 23: Bandschleifer
- 24: Stichsäge

## Patentansprüche

1. Mobiles Elektrogerät (1a...1d), umfassend ein Gerätegehäuse (2) mit wenigstens einem Akkuschacht (3) zur Aufnahme eines Akkumulators (7) mit zumindest einer spannungserzeugenden Zelle (9) und einer akkuseitigen Ladezustandsanzeige (11), einen elektrischen Verbraucher (4), einen Netzanschluss (5) sowie ein Ladegerät (6) zum Laden des zumindest einen Akkumulators (7), und
Mittel (13) zum Erfassen des Ladezustands des zumindest einen Akkumulators (7) und eine am mobilen Elektrogerät (1a...1d) angeordnete geräteseitige Ladezustandsanzeige (14, 14a, 14b),
**gekennzeichnet durch** eine Steuerung, welche dazu vorbereitet ist, die geräteseitige Ladezustandsanzeige (14, 14a, 14b) im Netzbetrieb des Elektrogeräts (1a...1d) zu deaktivieren.

2. Mobiles Elektrogerät (1a...1d) nach Anspruch 1,
**dadurch gekennzeichnet, dass** die Mittel zum Erfassen des Ladezustands durch eine im mobilen Elektrogerat (1a...1d) angeordnete geräteseitige elektronische Schaltung (13a) gebildet sind, welche elektrisch mit der zumindest einen spannungserzeugenden Zelle (9) verbunden ist.

3. Mobiles Elektrogerät (1a...1d) nach Anspruch 1,
**dadurch gekennzeichnet, dass** die Mittel zum Erfassen des Ladezustands durch eine Schnittstelle (13b) zu einem in dem Akkuschacht (3) befindlichen Akkumulator (7) gebildet sind, wobei der Akkumulator (7) eine akkuseitige elektronische Schaltung (10) zur Ermittlung des Ladezustands der zumindest einen spannungserzeugenden Zelle (9) umfasst und wobei die Schnittstelle dazu vorbereitet ist, den von der genannten ersten elektronischen Schaltung (10) ermittelten Ladezustand zu empfangen.

4. Mobiles Elektrogerät (1a...1d) nach einem der Ansprüche 1 bis 3,
**gekennzeichnet durch** eine Steuerung, welche dazu vorbereitet ist, die geräteseitige Ladezustandsanzeige (14, 14a, 14b) im Akkubetrieb des Elektrogeräts (1a...1d) zu aktivieren.

5. Mobiles Elektrogerät (1a...1d) nach einem der Ansprüche 1 bis 4,
**gekennzeichnet durch** eine Steuerung, welche dazu vorbereitet ist, die geräteseitige Ladezustandsanzeige (14, 14a, 14b) beim Ausschalten des Elektrogeräts (1a...1d) zu deaktivieren.

6. Mobiles Elektrogerät nach einem der Ansprüche 1 bis 5,
**dadurch gekennzeichnet, dass** dieses als Staubsauger (1c...1d) ausgebildet ist.

7. Set umfassend wenigstens ein mobiles Elektrogerät (1a...1d) nach einem der Ansprüche 1 bis 6 und zumindest einen austauschbaren Akkumulator.

8. Set nach Anspruch 7,
**gekennzeichnet durch** wenigstens ein Elektrohandgerät mit einem Akkuschacht zur Aufnahme eines Akkumulators (7).

## Claims

1. Mobile electrical appliance (1a...1d), comprising an appliance housing (2) with at least one battery compartment (3) for accommodating a battery (7) with at least one voltage-generating cell (9) and a battery-side charge indicator (11), an electrical consumer (4), a power connector (5), a charger (6) for charging the at least one battery (7), means (13) for detecting the state of charge of the at least one battery (7) and an appliance-side charge indicator (14, 14a, 14b) arranged on the mobile electrical appliance (1a...1d), **characterised by** a controller designed to deactivate the appliance-side charge indicator (14, 14a, 14b) during mains operation of the electrical appliance (1a...1d).

2. Mobile electrical appliance (1a...1d) according to claim 1, **characterised in that** the means for detecting the state of charge are formed by an appliance-side electronic circuit (13a) arranged in the mobile electrical appliance (1a...1d) and electrically connected to the at least one voltage-generating cell (9).

3. Mobile electrical appliance (1a...1d) according to claim 1, **characterised in that** the means for detecting the state of charge are formed by an interface (13b) to a battery (7) situated in the battery compartment (3), the battery (7) having a battery-side electronic circuit (10) for determining the state of charge of the at least one voltage-generating cell (9) and the interface being designed to receive the state of charge determined by the said first electronic circuit (10).

4. Mobile electrical appliance (1a...1d) according to one of claims 1 to 3, **characterised by** a controller designed to activate the appliance-side charge indicator (14, 14a, 14b) during battery operation of the electrical appliance (1a...1d).

5. Mobile electrical appliance (1a...1d) according to one of claims 1 to 4, **characterised by** a controller designed to deactivate the appliance-side charge indicator (14, 14a, 14b) when the electrical appliance (1a...1d) is switched off.

6. Mobile electrical appliance according to one of claims 1 to 5, **characterised in that** it is designed as a vacuum cleaner (1c...1d).

7. Set comprising at least one mobile electrical appliance (1a...1d) according to one of claims 1 to 6 and at least one interchangeable battery.

8. Set according to claim 7, **characterised by** at least one hand-held electrical appliance with a battery compartment for accommodating a battery (7).

## Revendications

1. Appareil électrique mobile (1a à 1d), comportant un boîtier d'appareil (2) ayant au moins un compartiment d'accumulateur (3) pour recevoir un accumulateur (7) ayant au moins une cellule génératrice de tension (9) et un indicateur d'état de charge côté accumulateur (11), un consommateur électrique (4), un connecteur d'alimentation sur secteur (5) ainsi qu'un chargeur (6) pour charger le au moins un accumulateur (7), et
des moyens (13) pour détecter l'état de charge du au moins un accumulateur (7) et un indicateur d'état de charge côté appareil (14, 14a, 14b) agencé sur l'appareil électrique mobile (1a à 1d),
**caractérisé par** une commande conçue pour désactiver l'indicateur d'état de charge côté appareil (14, 14a, 14b) lorsque l'appareil électrique (1a à 1d) fonctionne sur secteur.

2. Appareil électrique mobile (1a à 1d) selon la revendication 1,
**caractérisé en ce que** les moyens de détection de l'état de charge sont formés par un circuit électronique côté appareil (13a) agencé dans l'appareil électrique mobile (1a à 1d), lequel circuit est électriquement relié à la au moins une cellule génératrice de tension (9).

3. Appareil électrique mobile (1a à 1d) selon la revendication 1,
**caractérisé en ce que** les moyens de détection de l'état de charge sont formés par une interface (13b) vers un accumulateur (7) situé dans le compartiment d'accumulateur (3), dans lequel l'accumulateur (7) comporte un circuit électronique côté accumulateur (10) pour déterminer l'état de charge de la au moins une cellule génératrice de tension (9) et dans lequel l'interface est conçue pour recevoir l'état de charge déterminé par le premier circuit électronique (10) mentionné.

4. Appareil électrique mobile (1a à 1d) selon l'une des revendications 1 à 3,
**caractérisé par** une commande conçue pour activer l'indicateur d'état de charge côté appareil (14, 14a, 14b) lorsque l'appareil électrique (1a à 1d) fonctionne sur accumulateur.

5. Appareil électrique mobile (1a à 1d) selon l'une des revendications 1 à 4,
**caractérisé par** une commande conçue pour désactiver l'indicateur d'état de charge côté appareil (14, 14a, 14b) lorsque l'appareil électrique (1a à 1d) est arrêté.

6. Appareil électrique mobile (1a à 1d) selon l'une des revendications 1 à 5,
**caractérisé en ce que** celui-ci est réalisé sous la forme d'un aspirateur (1c à 1d).

7. Ensemble comportant au moins un appareil électrique mobile (1a à 1d) selon l'une des revendications 1 à 6 et au moins un accumulateur échangeable.

8. Ensemble selon la revendication 7,
**caractérisé par** au moins un appareil électrique tenu à la main, ayant un compartiment d'accumulateur pour recevoir un accumulateur (7).
